# EUROPEAN PATENT APPLICATION

(11) **EP 1 965 478 A1**
(43) Date of publication of application: **03.09.2008**
(21) Application number: 07103100.9
(22) Date of filing: 27.02.2007
(51) Int. Cl.: H02G 3/10, H02G 3/14

(54) **Electrical power connection point cover plate and manufacturing method and apparatus**

(71) Applicant: Enigma Glass Limited, Nechells Birmingham B7 5QL (GB)
(72) Inventor: Jansen, Gregory Cornelius Victor, Birmingham, B7 5QL (GB)
(74) Representative: Molony, Anna

(57) **Abstract**

An electrical power connection point cover plate 10 comprising a glass cover plate member 12, a power connection aperture 14, and fixing apertures 16, 18. The glass cover plate member 12 comprises piece of tempered optical quality sheet float glass. The rear (non-tin) side 12a of the glass cover plate member 12 is covered with a metallic epoxy/polyamide polymer based glass paint. The power connection aperture 14 comprises a generally rectangular aperture, suitable for receiving the actuation rocker of an electrical light rocker switch. The fixing apertures 16, 18 comprise countersunk holes with brass tube C-form rivets 20, 22 provided within the fixing apertures 16, 18, to line and protect the walls of the fixing apertures 16, 18. A method and apparatus for manufacturing an electrical power connection point cover plate are also provided.

## Description

The invention relates to an electrical power connection point cover plate, and to a method and apparatus for manufacturing the cover plate.

In this specification the term electrical power connection point is understood to mean any electrical connection point which allows a connection to be formed between an electrical supply and an electrical appliance, including toggle, rocker and push-button light switches, electronic light switches, mechanical and electronic dimmer switches, switched and non-switched electrical sockets, and telephone sockets.

Existing light switch cover plates and power socket cover plates are made of PVCu and are traditionally white in colour. They are prone to scratching and damage through use, and discolouration over time. In addition, PVCu has a relatively low melting point and a short circuit in an electrical connection point provided with a PVCu cover plate can result in the cover plate melting and ultimately catching fire.

Metal cover plates are also available and are provided in various metal finishes, including cast and polished brass, chrome, electroplate, and brush and stainless steel. Metal cover plates have the disadvantage of being electrically conductive, and must therefore be earthed in order to be safe for use. Similarly to the PVCu cover plates, metal cover plates are also easily marked and damaged through use, since the wear surface of the metal cover plate is its top surface. Metal cover plates are also prone to discolouration through time, especially in the case of electroplated or polished surfaces, and they are difficult to clean.

According to a first aspect of the invention there is provided an electrical power connection point cover plate comprising:
a glass cover plate member;
a power connection aperture provided in the glass cover plate member, for receiving at least part of a power connection apparatus; and
fixing means for fixing the glass cover plate member in its in use position.

The glass cover plate member preferably comprises a tempered glass cover plate member, and is most preferably a tempered float glass cover plate member.

The glass cover plate member may be substantially square, rectangular, circular, oval or triangular in shape.

Preferably, paint is applied across at least part of the in-use underside of the glass cover plate member. The paint is preferably an epoxy glass paint, and is most preferably an epoxy/polyamide polymer based glass paint. The epoxy glass paint may be a matt paint, a gloss paint or a metallic paint. The epoxy glass paint may be a luminescent paint.

The electrical power point cover plate may alternatively or additionally comprise one or more indicia elements provided on the in-use underside of the glass cover plate member. The indicia elements preferably comprise one or more alphanumeric characters or graphic elements. The indicia elements may be printed on or formed from plastic sheeting, most preferably polyvinyl chloride sheeting.

The in-use front face of the glass cover plate member may be formed with a satin finish, such as a sand-blasted finish or an acid etched finish.

One or more decorative elements of glass may be provided on the glass plate cover member, most preferably on the in-use front face of the glass plate cover member, to give the glass plate cover member a three-dimensional contoured surface.

The power connection aperture is preferably of a size and shape suitable to receive an electrical switch actuation member, such that the actuation member is accessible for operation by a user. The electrical switch may comprise a light switch, a dimmer switch or an electrical power socket switch.

A plurality of power connection apertures may be provided. One or more of the power connection apertures may be for receiving electrical switch actuation members. Alternatively, or additionally, one or more of the power connection apertures may be for receiving power connection terminals, such as electrical socket terminals or telephone socket terminals.

The fixing means preferably comprises one or more fixing apertures provided in the glass cover plate member, for receiving mechanical fixing means, such as a screw. The or each fixing aperture is preferably lined with a rivet, most preferably a tube C-form rivet.

According to a second aspect of the invention there is provided a method of manufacturing an electrical power connection point cover plate, the method comprising the steps of:
(a) cutting a glass plate of a desired size and shape;
(b) hardening the glass plate by heating the glass plate to a firing temperature, higher than the initial melting temperature of the glass and then flash cooling the glass plate to a lower, annealing temperature;
(c) annealing the glass plate at the annealing temperature for an annealing period and then cooling the glass plate to room temperature;
(d) forming a power connection aperture in the glass plate by: piercing the glass plate with a fine jet of water/abrasive mixture having a first pressure; and then cutting the aperture out of the glass plate, starting from the piercing, with a fine jet of water/abrasive mixture having a second, higher pressure; and
(e) thermal tempering the glass plate.

The glass plate is preferably cut from a sheet of float glass. Prior to step (b), the glass plate is preferably illuminated with ultraviolet light to identify the "tin side" of the glass plate, which will form the front face of the glass plate.

The hardening and annealing steps are preferably performed using a glass kiln. The glass plate is preferably arranged in the glass kiln with its "tin side" uppermost.

During the hardening step, the glass plate is preferably heated to a firing temperature of between 750 and 850 degrees Celsius. The glass plate is preferably heated to the firing temperature by heating the glass kiln to the firing temperature at a heating rate of approximately 900 degrees Celsius per hour. The glass plate is preferably flash cooled to the annealing temperature using forced cool air induction cooling of the glass kiln. The flash cooling preferably takes approximately 10 minutes to complete.

One or more decorative elements of glass may be fused onto the in-use front face of the glass plate cover member prior to the hardening step, to give the glass plate a three-dimensional contoured surface.

The annealing temperature is preferably between 515 and 540 degrees Celsius, and is most preferably approximately 520 degrees Celsius. The annealing period is preferably approximately 10 minutes in duration. The annealed glass plate is preferably cooled to a temperature of approximately 200 degrees Celsius in the glass kiln and is then removed from the glass kiln and allowed to cool to room temperature.

A plurality of glass plates may undergo the hardening and annealing steps simultaneously.

A plurality of power connection apertures may be formed in the glass plate. Additionally, one or more fixing apertures may be formed in the glass plate using the same stages as for forming the or each power connection aperture.

The piercing of the glass plate is preferably performed using a fine jet of water/abrasive mixture having a pressure of approximately 1034 bar (15,000 psi). Preferably, during the piercing stage the water/abrasive mixture jet is stationary.

The cutting of the or each power connection aperture and the or each fixing aperture in the glass plate is preferably performed using a fine jet of water/abrasive mixture having a pressure of approximately 3792 bar (55,000 psi). During the cutting stage, the glass plate is preferably mounted on a computer controlled cutting table, most preferably a computerised numerically controlled two-axis cutting table, and the water/abrasive mixture jet follows a cutting path determined by the cutting table.

Following the cutting of the or each fixing aperture, the or each fixing aperture is preferably countersunk. The countersinking of the or each fixing aperture is preferably performed using a water cooled mechanically driven countersinking drill bit, most preferably a diamond coated countersinking drill bit. The mechanically driven countersinking drill bit is preferably mounted on the computer controlled cutting table.

The thermal tempering step preferably comprises:
(a) in a glass kiln, heating the glass plate to greater than 600 degrees Celsius;
(b) maintaining the glass plate at greater than 600 degrees Celsius for a soaking period;
(c) removing the glass plate from the glass kiln to a cooling location;
(d) super cooling the glass plate to approximately 150 degrees Celsius in approximately 15 seconds; and
(e) cooling the glass plate to a handling temperature.

The super cooling of the glass plate is preferably performed by directing air flows onto the front and underside surfaces of the glass plate.

A plurality of glass plates may be tempered simultaneously.

The method may further comprise the step of decorating the or each glass plate, following the tempering of the or each glass plate. The step of decorating the or each glass plate preferably comprises applying epoxy glass paint to the underside of the or each glass plate. The epoxy glass paint is preferably sprayed by mechanical means, most preferably electrostatic spray or automatic spray, onto the underside of the glass plate. The step of decorating the or each glass plate may additionally comprise applying luminescent paint to the underside of the or each glass plate, prior to the application of the epoxy glass paint. Following the application of the epoxy glass paint, the decoration step preferably further comprises heat curing the paint.

The decoration step may comprise applying, prior to or instead of the application of epoxy glass paint, one or more indicia elements, in the form of one or more alphanumeric characters or graphic elements printed on or formed from plastic sheeting, to the underside of the glass plate. The or each indicia element is preferably heat sealed onto the glass plate.

The decoration step may alternatively or additionally comprise sandblasting or acid etching one or both of the front and underside surfaces of the glass plate prior to applying epoxy glass paint and/or indicia elements.

The method may further comprise the step of locating a rivet through the or each fixing aperture, to line and protect the fixing aperture.

According to a third aspect of the invention there is provided electrical power connection point cover plate manufacturing apparatus comprising:
first glass cutting apparatus;
a first glass kiln operable to harden a glass plate located therein by: heating the glass plate to a firing temperature, higher than the initial melting temperature of the glass; flash cooling the glass plate to a lower, annealing temperature; and annealing the glass plate at the annealing temperature for an annealing period;
second glass cutting apparatus operable to apply a fine jet of water/abrasive mixture having a first pressure to a glass plate to pierce the glass plate and subsequently to cut a power connection aperture out of the glass plate, starting from the piercing, with a fine jet of water/abrasive mixture having a second, higher pressure; and
glass tempering apparatus comprising: a second glass kiln operable to heat a glass plate to a temperature of at least 600 degrees Celsius; and air cooling apparatus operable to super cool a glass plate to approximately 150 degrees Celsius following its removal from the second glass kiln.

The first glass cutting apparatus preferably comprises a sheet float glass cutting table.

The manufacturing apparatus preferably further comprises an optical source operable to illuminate a glass plate with ultra violet light, to thereby identify the "tin side" of the glass plate, which will form the front face of the glass plate.

The first glass kiln is preferably operable to heat a glass plate to a firing temperature of between 750 and 850 degrees Celsius. The first glass kiln is preferably operable to heat to the firing temperature at a heating rate of approximately 900 degrees Celsius per hour.

The glass kiln is preferably further operable to flash cool to the annealing temperature using forced cool air induction cooling. The first glass kiln is preferably operable to flash cool in approximately 10 minutes. The first glass kiln is preferably further operable to subsequently cool to a temperature of approximately 200 degrees Celsius.

The first glass kiln can preferably process a plurality of glass plates simultaneously.

The second glass cutting apparatus is preferably operable to form a plurality of piercings in a glass plate and to subsequently cut a corresponding plurality of power connection apertures in the glass plate. The second glass cutting apparatus is preferably further operable to form one or more further piercings in a glass plate and to subsequently cut a corresponding one or more fixing apertures in the glass plate.

The second glass cutting apparatus is preferably a water-jet cutting apparatus comprising a water/abrasive mixture delivery aperture and a computer controlled cutting table, and being operable to deliver a fine jet of water/abrasive mixture having a first pressure, for piercing a glass plate, and subsequently to deliver a fine jet of water/abrasive mixture having a second, higher pressure, for cutting a power connection aperture out of a glass plate. The first pressure is preferably approximately 1034 bar (15,000 psi). The second pressure is preferably approximately 3792 bar (55,000 psi).

During the piercing stage the water/abrasive delivery aperture, and thus the water/abrasive mixture jet, is preferably stationary.

During the cutting stage, the water/abrasive mixture jet preferably follows a cutting path determined by the cutting table. The cutting table is preferably a computerised numerically controlled two-axis cutting table.

The water-jet cutting apparatus preferably further comprises a water cooled mechanically driven countersinking drill bit, most preferably a diamond coated countersinking drill bit. The mechanically driven countersinking drill bit is preferably mounted on the computer controlled cutting table.

The second glass cutting apparatus can preferably process a plurality of glass plates simultaneously in a two step process: in the first step, with the water/abrasive delivery aperture stationary, a first glass plate is pierced and the or each fixing aperture on a third glass plate is countersunk; and in the second step a second glass plate, located between the first and third glass plates, undergoes cutting of the or each power connection aperture.

The second glass kiln is preferably operable to heat a glass plate to greater than 600 degrees Celsius and to subsequently maintain the glass plate at greater than 600 degrees Celsius for a soaking period.

The air cooling apparatus preferably comprises air compressor apparatus coupled to air flow delivery nozzles arranged to direct air flows onto the front and underside surfaces of the glass plate.

The second glass kiln and the air cooling apparatus can preferably process a plurality of glass plates simultaneously.

The manufacturing apparatus may further comprise a painting station, located after the second glass kiln, at which epoxy glass paint is applied onto a glass plate. The painting station preferably comprises mechanical paint spraying means, most preferably electrostatic paint spraying means or automatic paint spraying means, and a paint curing kiln. The paint curing kiln is preferably a flatbed kiln or a roller kiln.

The manufacturing apparatus may alternatively or additionally comprise a satinising station operable to treat a surface of a glass plate to give the surface a satin finish. The satinising station preferably comprised sandblasting apparatus or acid etching apparatus. The satinising station is preferably located prior to a painting station.

The manufacturing apparatus may alternatively or additionally comprise a decorating station operable to apply one or more alphanumeric characters or graphic elements printed on or formed from plastic sheeting, to the underside of the glass plate and to subsequently heat seal the or each alphanumeric character or graphic element onto the glass plate. The decorating station is preferably located after a satinising station and before a painting station.

The manufacturing apparatus preferably further comprises riveting apparatus operable to locate a rivet through a fixing aperture. The riveting apparatus preferably comprises an electro-mechanical riveting machine.

Embodiments of the invention will now be described in detail, by way of example only, with reference to the accompanying drawings, in which:
Figure 1 is a diagrammatic representation of a single gang electrical light switch cover plate according to a first embodiment of the invention;
Figure 2 is a diagrammatic representation of a switched double electrical plug socket cover plate according to a second embodiment of the invention;
Figures 3a and 3b show a schematic representation of electrical power connection point cover plate manufacturing apparatus according to a third embodiment of the invention; and
Figure 4 is a flow chart showing the glass plate piercing, cutting and countersinking steps of the manufacturing process implemented using the manufacturing apparatus of Figure 3.

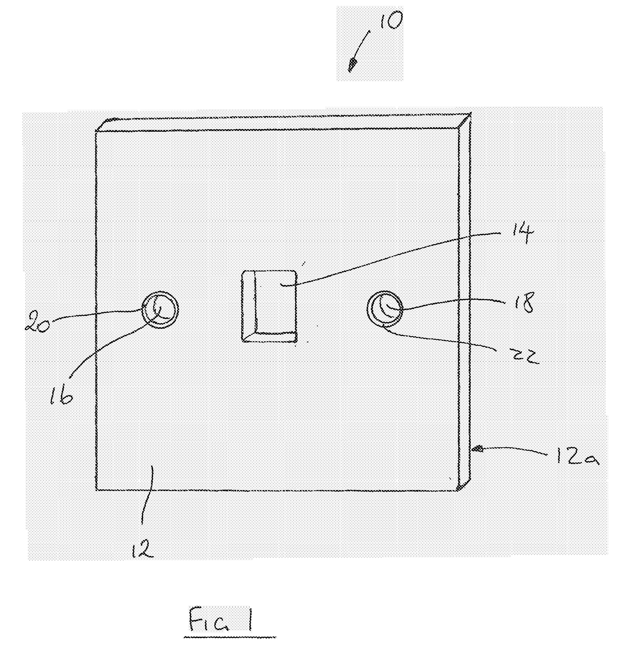

Referring to Figure 1, a first embodiment of the invention provides an electrical power connection point cover plate in the form of a light switch cover plate 10. The light switch cover plate 10 comprises a glass cover plate member 12, a power connection aperture 14, and fixing means in the form of fixing apertures 16, 18.

The glass cover plate member 12 comprises an 85 millimetre square, 4 millimetre thick piece of tempered optical quality sheet float glass. The rear (non-tin) side 12a of the glass cover plate member 12 is covered with a metallic epoxy/polyamide polymer based glass paint.

The power connection aperture 14 comprises a generally rectangular 12 millimetre by 10 millimetre aperture, suitable for receiving the actuation rocker of an electrical light rocker switch; the switch mechanism to be located at the rear side of the glass cover plate member 12.

The fixing apertures 16, 18 comprise 5 millimetre internal diameter countersunk holes. Brass tube C-form rivets 20, 22 are provided within the fixing apertures 16, 18, to line and protect the walls of the fixing apertures 16, 18.

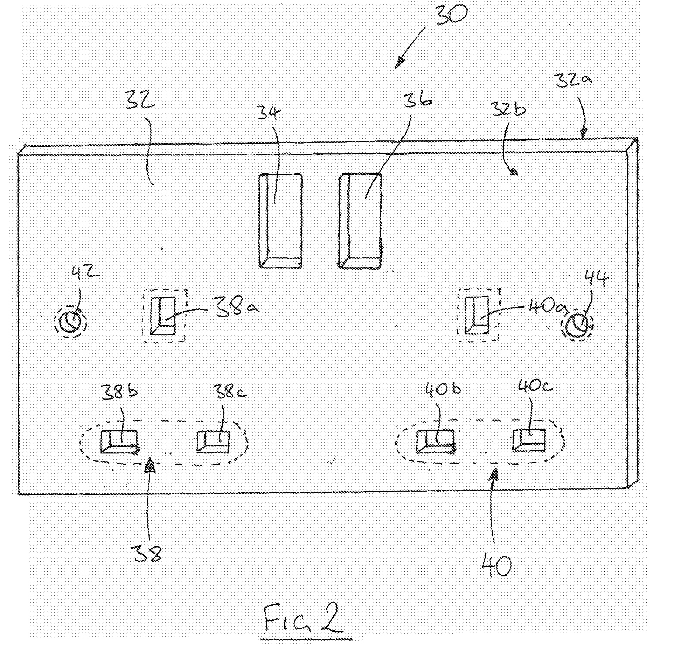

A double switched electrical socket cover plate 30 according to a second aspect of the invention is shown in Figure 2. The socket cover plate 30 comprises a glass cover plate member 32, power connection apertures 34, 36, 38a, 38b, 38c, 40a, 40b, 40c and fixing apertures 42, 44.

The glass cover plate member 32 comprises a rectangular 150 millimetre by 85 millimetre, 4 millimetre thick piece of tempered optical quality sheet float glass. The rear (non-tin) side 32a of the glass cover plate member 32 is covered with a layer of luminescent paint followed by a layer of epoxy/polyamide polymer based glass paint. The front (tin) side 32b of the glass cover plate member 32 has a satin (sandblasted) finish.

Two of the power connection apertures 34, 36 comprise generally rectangular 12 millimetre by 10 millimetre apertures, suitable for receiving the actuation rocker of an electrical rocker switch; the switch mechanism to be located at the rear side of the glass cover plate member 32. The remaining power connection apertures 38a, 38b, 38c, 40a, 40b, 40c are grouped into two sets of three apertures, for receiving the terminals of two power sockets 38, 40. Two of the power socket terminal apertures 38a, 40a have a width of 4.5 millimetres and a height of 9 millimetres, for receiving the earth terminals of the power sockets 38, 40. The earth terminal apertures 38a, 40a are countersunk with a correspondingly rectangular border (shown in dashed lines). The remaining power socket terminal apertures 38b, 38c, 40b, 40c have a width of 7 millimetres and a height of 4.5 millimetres for receiving the live and neutral terminals of the power sockets 38, 40. Each pair 38b, 38c and 40b, 40c of live and neutral terminal apertures are countersunk with an oval shaped border (shown in dashed lines).

The fixing apertures 42, 44 comprise 5 millimetre internal diameter countersunk (shown in dashed lines) holes. Brass tube C-form rivets (not shown, so that the countersinking is visible) are provided within the fixing apertures 42, 44, to line and protect the walls of the fixing apertures 42, 44.

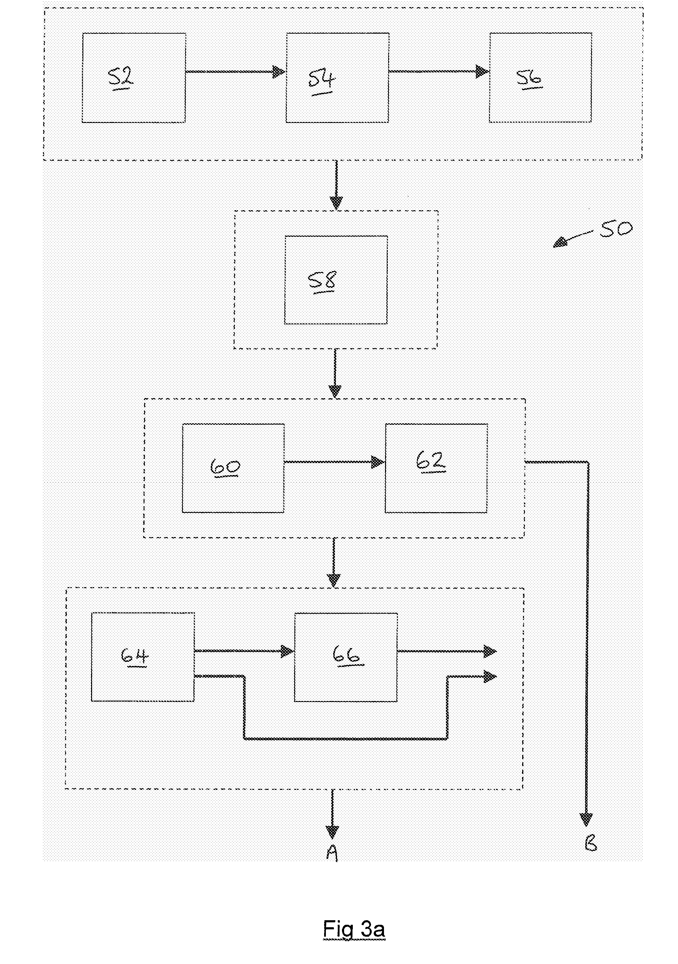

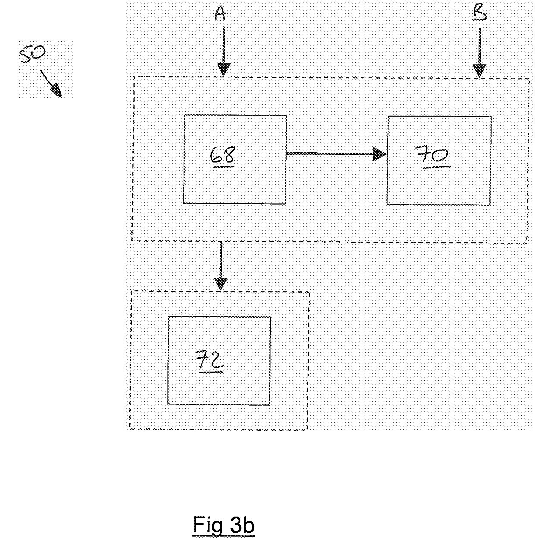

Referring to Figures 3a and 3b, a third embodiment of the invention provides electrical power connection point cover plate manufacturing apparatus 50. The manufacturing apparatus 50 comprises first glass cutting apparatus 52, an ultra violet (UV) light source 54, a first glass kiln 56, second glass cutting apparatus 58, a second (tempering) glass kiln 60, air cooling apparatus 62, sandblasting apparatus 64, a decoration station 66, spray-painting apparatus 68, a paint curing kiln 70, and a riveting machine 72.

The first glass cutting apparatus 52 comprises a sheet float glass cutting table. The cutting table 52 is operable to cut sheet float glass into a glass cover plate member of any shape, including square, rectangular, circular, oval, triangular and abstract 2-dimensional shapes.

The specifications for electrical power connection point cover plates outside the UK generally differ from the UK specification, and the cutting table 52 is operable to cut glass plates meeting these requirements. The cutting table 52 is also able to cut sheet glass of different thicknesses, generally up to 6mm.

The UV light source 54 is operable to irradiate a glass cover plate member with UV light, to thereby identify the tin-side of the glass.

The first glass kiln 56 is a top-loading glass kiln. The kiln shelves are prepared and pre-fired with high fire batt wash (high in triple grade alumina) for receiving one or more glass cover plate members, tin-side uppermost. The kiln 56 is operable to heat to a temperature of 750-850°C at a heating rate of approximately 900 °C per hour. The kiln 56 includes force cool air induction apparatus.

Alternatively, a continuous mosaic roller bed kiln can be used.

The second glass cutting apparatus 58 is water-jet cutting apparatus having a water/abrasive mixture delivery aperture and a water cooled mechanically driven diamond coated countersinking drill bit mounted on a computerised numerically controlled two-axis cutting table. The water-jet cutting apparatus comprises an ultra-high pressure pump system operable to deliver a fine jet of water/abrasive mixture having a pressure of 1034 bar (15,000 psi) through the delivery aperture, for piercing a glass plate, and is operable to subsequently increase the pressure to 3792 bar (55,000 psi) for cutting a power connection aperture out of a glass plate. The cutting table is programmable to set a cutting path for the delivery aperture, and thus the water/abrasive jet, across a glass cover plate member.

The water-jet cutting apparatus also comprises a microcontroller programmed to control the change in the water/abrasive mixture pressure in response to the movement and positioning of the cutting table.

The second, tempering glass kiln 60 is operable to heat a batch of glass plates to a temperature 620 °C.

The air cooling apparatus 62 is provided alongside the tempering glass kiln, in a quenching/cooling area. The cooling apparatus 62 comprises an air compressor having its output coupled to air flow delivery nozzles arranged to direct air flows onto the front and underside surfaces of the glass plates. The air cooling apparatus 62 super cools the glass plates from a temperature of over 600°C to approximately 150°C in about 15 seconds.

The spray painting apparatus 68 in this example is a mechanical paint spraying apparatus using an electrostatic spray. It may alternatively be an automatic paint spraying apparatus. The spray painting apparatus 68 also comprises nonmagnetic paint trays in which the glass plates to be sprayed are placed.

The paint curing kiln 70 is a low heat flatbed kiln operable to heat the painted glass plates to a paint curing temperature of 200°C. The paint curing kiln 70 may alternatively be a roller kiln.

The riveting machine 72 is an electro mechanical foot-operated, twin-headed riveting machine.

The manufacturing apparatus 50 is operated as follows, using a method of manufacturing an electrical power connection point cover plate according to a fourth embodiment of the invention.

Sheet float glass is cut into one or more glass plates by automated or manual means on a specialised cutting table 52; cutting in the x and y axis (the z axis is also used if a glass plate is required to be curved). In the case of a UK specification single plug socket or light switch, the glass plate(s) will have a size of 85mm x 85mm. The glass plate size will vary for double plug sockets and other types of electrical power connection sockets (e.g. cooker switches, shaving plug plates, infra red plates, telephone jack plates etc.).

The cut glass plates are now metallised to identify the tin side of the glass, by illuminating the glass plates with UV light from the UV light source 54.

The glass plates are then laid upon prepared shelves, tin side uppermost, within the first glass kiln 56. The kiln shelves are prepared and pre-fired with high fire batt wash (high in triple grade alumina). The kiln shelves are then loaded into the first glass kiln 56.

The first glass kiln 56 is then fired on a slow curve at a rate of 900°C per hour to a target temp of approximately 840°C. The temperature to which the glass plates are heated will vary between 750°C and 850°C, depending upon glass type (silica content), glass sheet thickness, piece size, mean air pressure and mean altitude of the kiln 56.

Once a temperature of 840°C has been reached the kiln 56 is flash cooled for a period of 10 minutes using forced cool air induction, to an annealing temperature of not less than 520°C; the annealing temperature can vary according to the coefficient of expansion of the glass. This heating and cooling of the glass plates causes an initial hardening of the glass.

Following annealing, the kiln 56 is cooled to 200°C and the glass plates are removed from the kiln 56 and allowed to cool to room temp.

If decoration of the glass plates is required, by fusing decorative glass pieces to the glass plates to give a three dimensional effect, this is carried out prior to the hardening of the glass plates in the first glass kiln 56.

Power connection apertures and fixing apertures are next formed in the glass plates. The forming of power connection apertures and fixing apertures in the glass plates is performed using water-jet cutting - the application of a pressurised fine jet of water mixed with an abrasive.

The formation of the apertures takes place in two stages. Firstly, the piercing of the glass plate whilst the water/abrasive jet is stationary, and secondly, the cutting of the apertures, following a path determined by the computerised numerically controlled (CNC) two-axis cutting table.

To avoid shattering of the glass plates and spalling or splintering around the entry point of the jet, piercing is carried out at a lower pressure (1034 bar (15,000 psi)) than cutting (3792 bar (55,000 psi)).

The cycle time for forming the apertures is determined by:
Tₚ = duration of the pierce (3-4 secs);
Tₕ = duration to change pressure from low to high and vice versa;
Tₘ = duration of movement of head between work pieces (distance dependent); and
T_{c} = duration of cut (distance dependent).

The adjustment of water pressure on ultra high-pressure (UHP) pump systems is normally achieved by manual switching. To reduce the cycle time, a control system links the independent controls of the pump and the CNC cutting table, to enable programmable control of the pressure adjustment.

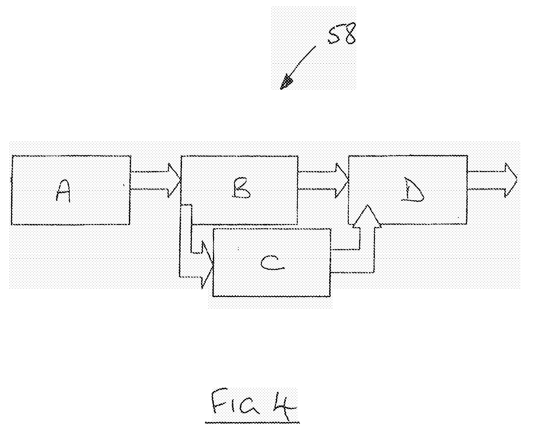

The fixing apertures on each glass plate also require countersinking. The countersinking process is synchronised with the piercing process (whilst the cutting head is stationary) for the fixing apertures. For each water/abrasive jet delivery aperture there is an associated countersinking drill bit that follows in the same lateral plane as the delivery aperture, forming the countersink at the same time as the pierce, one or two holes behind in the sequence. This is illustrated in the flow chart of Figure 4, where: A = loading of the glass plates onto the cutting table; B = piercing of an aperture; C = countersinking of a fixing aperture; and D = cutting of an aperture.

The glass plates are now tempered, as follows. The glass plates are evenly placed on trays on the load table of the tempering kiln 60 and the trays placed into the tempering kiln 60. The tempering kiln 60 is then heated to approximately 620°C.

The heating profile of the glass plates is monitored carefully to ensure that critical temperatures are attained. During the heating of a first batch of glass plates the next batch of glass plates are prepared on the loading table.

When the glass plates have reached the desired temperature and soaked for a short period of time they are then discharged into the quench/cooling area. The glass plates are then subject to 'super cooling' by air through nozzles directed at their top and bottom surfaces. The glass plates will rapidly cool from 600°C to about 150°C in approximately 15 seconds. The tempering process is now complete. The molecular structure of the glass has been changed and it can now withstand approximately seven times normal surface forces before breaking. The glass plates are then cooled down to handling temperature. Meanwhile the glass plates in the tempering kiln 60 is being heated as described and the load table prepared for the next batch.

When the following batch of glass plates that are in the tempering kiln 60 is at temperature, the batches of glass plates move forward one stage in the tempering process - load to kiln 60, kiln 60 to quench/cooling, quench/cooling to unload, etc and so the process batch continues.

The glass plates are next laid tin side (front side) down on prepared and protected non magnetic paint trays and are then sprayed by mechanical means (electrostatic spray or automatic spray) on the non-tin (rear face) side of the glass plates with a coat of specialised high solids two-pack epoxy glass paint (when reacted based on epoxy and polyamide polymers) to give as required either a metallic finish paint surface or a high gloss finish paint coating.

Luminescent paints can also be sprayed applied, underneath a final coat of epoxy glass paint, and pre-cured.

The painted glass plates, still on the paint trays, are then loaded into a low heat flatbed (or roller) curing kiln 70 and heated to a maximum mean temperature of 200°C, with a soak period of 10 minutes at 185-200°C, to cure the paint. The glass plates are then allowed to cool naturally to room temp.

The glass plates can also be sandblasted or acid etched prior to painting in order to give them a satin finish. Decorative elements in the form of lettering and/or graphics form on polyvinyl chloride (PVC) sheets can also be applied and heat sealed onto the non-tin (rear) side of the glass plates prior to satinising and/or painting.

The glass plates then have brass tube 'C'-form rivets located through the fixing apertures using an electro mechanical foot - operated riveting machine 72.

Various modifications may be made to the described embodiments without departing from the scope of the invention. The glass plate member may be of a different size and/or shape and/or thickness to that described and a different number and/or configuration of power connection apertures and/or fixing apertures may be provided, according to the type of cover plate and the specification of different countries. The electrical power connection point cover plate may be a cover plate for any of a toggle, rocker or push-button light switch, an electronic light switch, a mechanical or electronic dimmer switch, a switched or non-switched electrical socket, or a telephone socket. The electrical power connection point cover plate may be a cover plate for a single or multiple gang light switch, or a single or multiple socket, such as an electrical supply socket or a telephone socket.

The glass plate member may be provided with a different type of decoration to that described, including being painted on the non-tin side, sandblasted or acid etched on the tine-side, and having one or more PVC indicia elements provided under the paint layer on the non-tin side. The glass plate member may also have one or more second or third level decorative glass elements fused onto the tin-side, to give it a contoured appearance.

The water jet cutting apparatus may deliver a piercing jet having a different pressure to that described and a cutting jet having a different pressure to that described.

The described embodiments provide various advantages, as follows. The weaker surface, being the surface having the PVC decorative elements and/or the paint applied to it, is the rear/underside of the electrical power connection point cover plate and it thus the decoration is protected from wear and abrasion during use. The cover plate can easily be decorated in various different forms, including painting, the addition of alphanumeric characters and graphics, and satinising, and the decoration is wear resistant. The electrical power connection point cover plates are scratch and abrasion resistant, and they are easier to clean and less likely to harbour contaminants than traditional PVCu or metal cover plates. They are also tolerant to stronger cleaning products due to their being made of glass. In addition, the electrical power connection point cover plates are heat resistant to a much higher temperature (approximately 1200°C) than traditional cover plates, and can therefore help protect against fire in the event of an electrical short occurring in the electrical power connection point.

The manufacturing method gives the electrical power connection point cover plates a double toughened glass finish, which is stronger than safety glass. The manufacturing method, in particular the waterjet based cutting of the power connection apertures and the fixing apertures means that the configuration of the electrical power connection point cover plates can be readily altered, for example to meet the specifications of different countries or to produce different types of cover plates, without requiring extensive and expensive re-tooiing, as would be required for traditional PVCu cover plates. Many different types of electrical power connection point cover plates may be manufactured using the described method and apparatus, including cover plates for toggle, rocker and push-button light switches, electronic light switches, mechanical and electronic dimmer switches, switched and non-switched electrical sockets, and telephone sockets, and the switches and sockets can be single or multiple switches or sockets.

## Claims

1. An electrical power connection point cover plate comprising:
a glass cover plate member;
a power connection aperture provided in the glass cover plate member, for receiving at least part of a power connection apparatus; and
fixing means for fixing the glass cover plate member in its in use position.

2. An electrical power connection point cover plate as claimed in claim 1, wherein the glass cover plate member comprises a tempered float glass cover plate member.

3. An electrical power connection point cover plate as claimed in claims 1 or 2, wherein epoxy/polyamide polymer based glass paint is applied across at least part of the in-use underside of the glass cover plate member.

4. An electrical power connection point cover plate as claimed any preceding claim, wherein the power connection aperture is of a size and shape suitable to receive an electrical switch actuation member, such that the actuation member is accessible for operation by a user.

5. An electrical power connection point cover plate as claimed any preceding claim, wherein a plurality of power connection apertures are provided, one or more of the power connection apertures being for receiving an electrical switch actuation member or a power connection terminal.

6. An electrical power connection point cover plate as claimed any preceding claim, wherein the fixing means comprises one or more fixing apertures provided in the glass cover plate member, for receiving mechanical fixing means, the or each fixing aperture being lined with a rivet.

7. A method of manufacturing an electrical power connection point cover plate, the method comprising the steps of:
(a) cutting a glass plate of a desired size and shape;
(b) hardening the glass plate by heating the glass plate to a firing temperature, higher than the initial melting temperature of the glass and then flash cooling the glass plate to a lower, annealing temperature;
(c) annealing the glass plate at the annealing temperature for an annealing period and then cooling the glass plate to room temperature;
(d) forming a power connection aperture in the glass plate by: piercing the glass plate with a fine jet of water/abrasive mixture having a first pressure; and then cutting the aperture out of the glass plate, starting from the piercing, with a fine jet of water/abrasive mixture having a second, higher pressure; and
(e) thermal tempering the glass plate.

8. A method as claimed in claim 7, wherein during the hardening step, the glass plate is heated to a firing temperature of between 750 and 850 degrees Celsius in a glass kiln by heating the glass kiln to the firing temperature at a heating rate of approximately 900 degrees Celsius per hour, and the glass plate is subsequently flash cooled to a annealing temperature of approximately 520 degrees Celsius in approximately 10 minutes using forced cool air induction cooling of the glass kiln.

9. A method as claimed in claims 7 or 8, wherein a plurality of power connection apertures and one or more fixing apertures are formed in the glass plate.

10. A method as claimed in any of claims 7 to 9, wherein the piercing of the glass plate is performed using a fine jet of water/abrasive mixture having a pressure of approximately 1034 bar (15,000 psi).

11. A method as claimed in any of claims 7 to 10, wherein the cutting of the or each power connection aperture and one or more fixing apertures in the glass plate is performed using a fine jet of water/abrasive mixture having a pressure of approximately 3792 bar (55,000 psi).

12. A method as claimed in any of claims 7 to 10, wherein the thermal tempering step preferably comprises:
in a glass kiln, heating the glass plate to greater than 600 degrees Celsius;
maintaining the glass plate at greater than 600 degrees Celsius for a soaking period;
removing the glass plate from the glass kiln to a cooling location;
super cooling the glass plate to approximately 150 degrees Celsius in approximately 15 seconds; and
cooling the glass plate to a handling temperature.

13. Electrical power connection point cover plate manufacturing apparatus comprising:
first glass cutting apparatus;
a first glass kiln operable to harden a glass plate located therein by: heating the glass plate to a firing temperature, higher than the initial melting temperature of the glass; flash cooling the glass plate to a lower, annealing temperature; and annealing the glass plate at the annealing temperature for an annealing period;
second glass cutting apparatus operable to apply a fine jet of water/abrasive mixture having a first pressure to a glass plate to pierce the glass plate and subsequently to cut a power connection aperture out of the glass plate, starting from the piercing, with a fine jet of water/abrasive mixture having a second, higher pressure; and
glass tempering apparatus comprising: a second glass kiln operable to heat a glass plate to a temperature of at least 600 degrees Celsius; and air cooling apparatus operable to super cool a glass plate to approximately 150 degrees Celsius following its removal from the second glass kiln.

14. Apparatus as claimed in claim 12, wherein the second glass cutting apparatus can process a plurality of glass plates simultaneously in a two step process: in the first step, with the water/abrasive delivery aperture stationary, a first glass plate is pierced and the or each fixing aperture on a third glass plate is countersunk; and in the second step a second glass plate, located between the first and third glass plates, undergoes cutting of the or each power connection aperture.

15. Apparatus as claimed in claims 12 or 13, wherein the manufacturing apparatus further comprises riveting apparatus operable to locate a rivet through a fixing aperture.
